# EUROPEAN PATENT SPECIFICATION

(11) **EP 2 132 139 B1**
(45) Date of publication and mention of the grant of the patent: **02.03.2016**
(21) Application number: 08714361.6
(22) Date of filing: 06.03.2008
(51) Int. Cl.: B01D 61/02, B01D 9/00, C01D 3/16, C01D 3/06, B01D 61/58, B01D 61/36

(54) **A METHOD OF TREATING POTASH**
VERFAHREN ZUR BEHANDLUNG VON POTTASCHE
PROCÉDÉ DE TRAITEMENT DE LA POTASSE

(30) Priority: 06.03.2007 AU 2007901152 P
(43) Date of publication of application: 16.12.2009
(73) Proprietor: Potasio Rio Colorado S.A., C1107CDA Buenos Aires (AR)
(72) Inventor: SHAW, Raymond, Walter, Princes Hill, Victoria 3054 (AU); BATTERHAM, Robin, John, Parkville, Victoria 3052 (AU)
(74) Representative: ZBM Patents - Zea, Barlocci & Markvardsen
(86) International application number: PCT/AU2008/000313
(87) International publication number: WO 2008/106741

(56) References cited:
- GB-A- 1 240 667
- GB-A- 2 229 379
- JP-A- 52 032 880
- JP-A- 55 056 014
- US-A- 3 994 531
- US-A- 4 224 035
- US-B2- 7 083 730

## Description

The present invention relates to a method of separating potassium chloride and sodium chloride from a heated solution of these salts.

The present invention relates particularly, although by no means exclusively, to treating potash ore, such as ore containing potash minerals such as sylvinite (a mixture of sylvite (KCl) and rock salt (NaCl)) to recover potassium chloride from the ore.

The dissolution-crystallisation (or hot leaching) process is one known process for recovering potassium chloride from potash ores.

In the dissolution-crystallisation process, potash ore is crushed and washed, clay is removed from the washed ore, and the resultant clarified solution is heated, thereby dissolving potassium chloride and sodium chloride from the washed ore.

One downstream processing option in the dissolution-crystallisation process includes evaporating water from the heated solution and thereby causing precipitation of potassium chloride and sodium chloride from solution. The precipitated potassium chloride and sodium chloride are then separated from each other in a subsequent flotation step.

Another downstream processing option takes advantage of the fact that potassium chloride is very much more soluble in hot water than in cold water, whereas sodium chloride is only slightly more soluble in hot water (for example water at 100°C) than in cold water (for example water at 20°C). Consequently, in solutions saturated with respect to both potassium chloride and sodium chloride, sodium chloride is less soluble at higher temperatures.

This other downstream processing option includes precipitating sodium chloride selectively during evaporation by limiting the extent of evaporation - taking advantage of the lower solubility of sodium chloride compared to potassium chloride at higher temperatures -and after separating precipitated sodium chloride from the solution, cooling the solution and precipitating potassium chloride from the solution - taking advantage of the lower solubility of potassium chloride at lower temperatures than at higher temperatures.

US4224035 discloses a process for separating a first salt and a second salt from an aqueous containing both salts and salt impurities, the solubility of the first salt increasing more with increasing temperatures than the solubility of the second salt, at least a portion of the salt impurities precipitating as crystals with a slower settling rate than that of precipitated second salt, by passing the solution through a series of evaporators, wherein second salt and salt impurities are precipitated in each evaporator. The bottom of each evaporator communicates with an elutriation leg into which precipitated salts settle, and into which a fluidizing liquid is introduced to carry precipitated salts settle, and into which a fluidizing liquid is introduced to carry precipitated salt impurities back to the evaporators and from which second salt slurry is withdrawn.

In both of the above processing options, the evaporated water is lost, and this is undesirable.

In addition, in both of the above processing options there are high energy costs associated with heating process solutions, and this is undesirable.

GB229379 discloses a distillation separation membrane for use in the desalinization of sea water or brine comprising a porous support member of a specific polymer material and a hydrophobic separation coating.

An object of the present invention is to provide another process for recovering potassium chloride from a source of potassium chloride such as a potash ore that does not include removing water completely from the process streams using water evaporation steps and thereby avoids loss of water from the process by evaporation.

The present invention is based on a realization that a combination of (a) extracting water from a heated solution containing potassium chloride and sodium chloride using a membrane system and (b) subsequently cooling the solution discharged from the membrane system is an effective method of recovering potassium chloride and sodium chloride from the solution.

In general terms, the present invention is a method of separating potassium chloride and sodium chloride from a heated solution of these salts that includes a combination of steps of (a) extracting water from a heated solution containing potassium chloride and sodium chloride using a membrane system and (b) subsequently cooling the solution discharged from the membrane system, whereby steps (a) and (b) make it possible to selectively recover potassium chloride and sodium chloride from the solution. Accordingly, in general terms, the method also includes selectively recovering potassium chloride and sodium chloride from the solution.

According to the present invention there is provided a method of separating potassium chloride and sodium chloride from a heated solution of these salts includes the steps of sequentially:
(a) forming a heated solution containing potassium chloride and sodium chloride derived from a potash ore;
(b) passing the solution through a distillation membrane system and removing water from the solution and thereby increasing the concentration of sodium chloride in the solution above the solubility of sodium chloride at the temperature of the solution and precipitating sodium chloride from the solution; wherein the distillation membrane system is one of a hydrophobic system or a combination of hydrophilic and hydrophobic systems;
(c) separating the precipitated sodium chloride from the solution;
(d) cooling the solution and thereby decreasing the solubility of potassium chloride below the concentration of potassium chloride in the solution and thereby precipitating potassium chloride from the solution; and
(e) separating potassium chloride from the solution.

The above-described membrane system removes water other than by evaporation and is advantageous on this basis. Moreover, the removed water is available for use in other process steps.

Step (a) of forming the heated solution containing potassium chloride and sodium chloride may include forming the solution by dissolving mined ores from an ore body containing minerals that contain potassium chloride and sodium chloride, such as potash ore, above ground or via solution mining involving injecting heated water or a heated solution that is unsaturated with respect to potassium chloride and sodium chloride into an ore body, such as a potash ore body, and dissolving the ore underground.

The ore body may contain other materials that are taken into solution into the heated solution and can be beneficially processed in step (b) using the membrane system.

For example, in situations where the ore body and thereafter the heated solution contains significant amounts, even to saturation levels, of magnesium chloride, as may be the case when there is carnallite (KMgCl₃.6(H₂O)) present in or with the potash ore, the membrane system may facilitate concentrating up the solution and precipitating magnesium chloride in downstream method steps.

In such situations, the method may include the steps of precipitating and thereafter separating precipitated magnesium chloride from the solution.

Preferably step (a) includes forming the solution at a temperature of at least 50°C.

More preferably, step (a) includes forming the solution at a temperature of at least 60°C.

It is preferred particularly that step (a) includes forming the solution at a temperature of at least 70°C.

Preferably step (a) includes forming the solution at a temperature of less than 90°C.

More preferably step (a) includes forming the solution at a temperature of less than 80°C.

Preferably step (b) includes controlling water removal from the solution to control water removal to precipitate sodium chloride crystals of a selected size.

The membrane system is a hydrophobic system which relies on vapor pressure differences resulting primarily from temperature differences to remove water from the solution or to transfer water between solutions using a process termed "membrane distillation".

The membrane system may also be a combination of hydrophobic and hydrophilic membranes whereby water is transferred from the solution by both membrane distillation and osmosis.

Preferably the method includes recycling the remaining solution after the potassium chloride separation step (e) to the method.

Preferably the method includes heating the remaining solution prior to recycling the solution to the method.

Preferably the method includes heating the remaining solution prior to recycling the solution to the method by heat exchange with the solution supplied to step (d) and thereby cooling the solution to precipitate potassium chloride.

Preferably the method includes combining (i) the remaining solution after the potassium chloride separation step (e) and (ii) water removed from the solution in step (b), heating the combined solution, and using the heated combined solution in step (a) and forming the heated solution containing potassium chloride and sodium chloride.

The present invention is described further by way of example with reference to the accompanying drawings, of which:
Figure 1 is a flowsheet of one embodiment of the method of treating potash ore to recover potassium chloride from the ore in accordance with the present invention;
Figure 2 is a flowsheet of another embodiment of the method of treating potash ore to recover potassium chloride from the ore in accordance with the present invention; and
Figure 3 is a flowsheet of another embodiment of the method of treating potash ore to recover potassium chloride from the ore in accordance with the present invention.

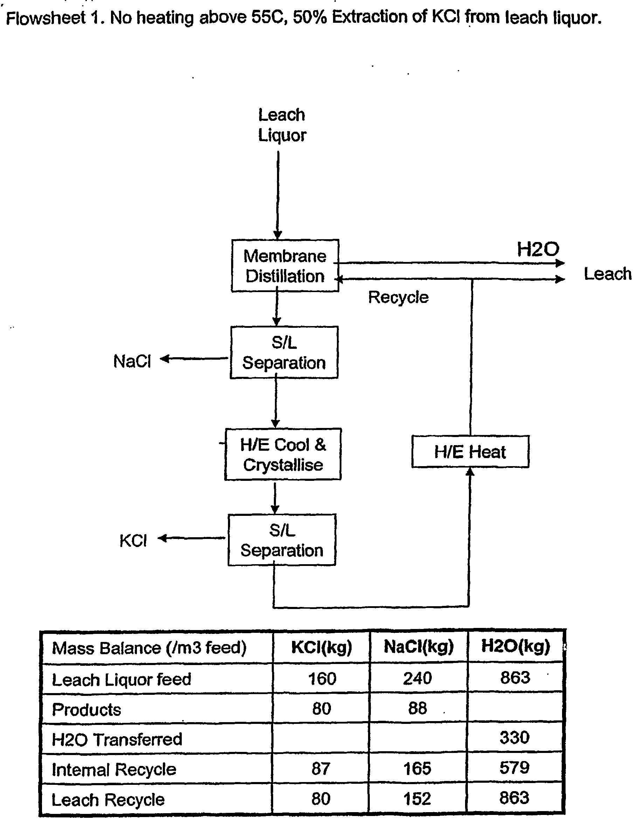

With reference to Figure 1, a feed solution (referred to as a "Leach Liquor" in the flowsheet) at a temperature of no more than 55°C that is saturated or nearly saturated with respect to potassium chloride and sodium chloride is supplied to a hydrophobic membrane system (referred to as "Membrane Distillation" in the flowsheet), whereby water is removed from the solution as the solution passes through the membrane.

The membrane system may be any suitable system that enables water transfer from the solution by membrane distillation. Such water transfer does not involve evaporation of water.

The removal of water from the solution increases the concentration of sodium chloride in the solution above the solubility limit of sodium chloride at that temperature, with a result that sodium chloride precipitates from the solution.

The amount of water removal is controlled so that preferably the concentration of potassium chloride in the solution does not exceed the solubility limit of potassium chloride at the temperature. Accordingly, the step is controlled to selectively precipitate sodium chloride rather than potassium chloride.

The amount of precipitation depends on a range of factors, including the initial concentration of sodium chloride in the solution, the solution temperature, the amount of water removed from the solution, and the residence time of the solution in the membrane system.

The precipitation of the sodium chloride may be deliberately controlled to give crystals of a reasonably uniform size and shape by taking advantage of the process termed "membrane crystallization" which is possible using membrane systems of this type.

Alternatively, the precipitation may be largely uncontrolled if these properties are not important in the subsequent separation and marketing of the sodium chloride.

The solution containing precipitated sodium chloride from the membrane system is supplied to a solid/liquid separator (referred to as "S/L Separation" in the flowsheet) and precipitated sodium chloride is separated from the solution in the separator.

The separator may be any suitable solids/liquid separation unit.

The precipitated sodium chloride discharged from the solid/liquid separator is processed further as may be required.

The remaining solution discharged from the solid/liquid separator is transferred to a heat exchanger (referred to as "H/E Cool & Crystallise" in the flowsheet) and is cooled as it passes through the heat exchanger, thereby reducing the solubility of potassium chloride in the solution below the concentration of the potassium chloride in the solution and thereby precipitating potassium chloride from the solution.

By way of example, the heat exchanger may include a vacuum distillation step for removal of additional water and to provide some cooling, albeit the extent to which this can be done is limited by the need to avoid excessive sodium chloride precipitation if this causes contamination which lowers the value of the potassium chloride.

The heat exchanger may be any suitable heat exchanger.

The precipitated potassium chloride is separated from the solution in a down-stream solid/liquid separator (referred to as "S/L Separation" in the flowsheet), thereby completing the recovery of potassium chloride from the potash ore.

The separator may be any suitable solids/liquid separation unit.

The precipitated potassium chloride is processed further as may be required.

The remaining solution discharged from the solids/liquids separator, which still contains potassium chloride and sodium chloride, albeit at lower concentrations than the initial feed solution, is supplied to a heat exchanger (referred to as "H/E Heat" in the flowsheet) and heated therein. The heat exchanger may be any suitable heat exchanger. Advantageously, the heat exchanger is the heat exchanger used to cool the above-described solution containing potassium chloride from the 1^{st} S/L Separation step.

At least a part of the heated solution is then recycled to the membrane system and is used beneficially to maintain the temperature in the membrane system.

The main drivers for the flowsheet are the need to keep a reasonably high temperature in the membrane system to avoid precipitation of potassium chloride and a desire to minimise total energy usage.

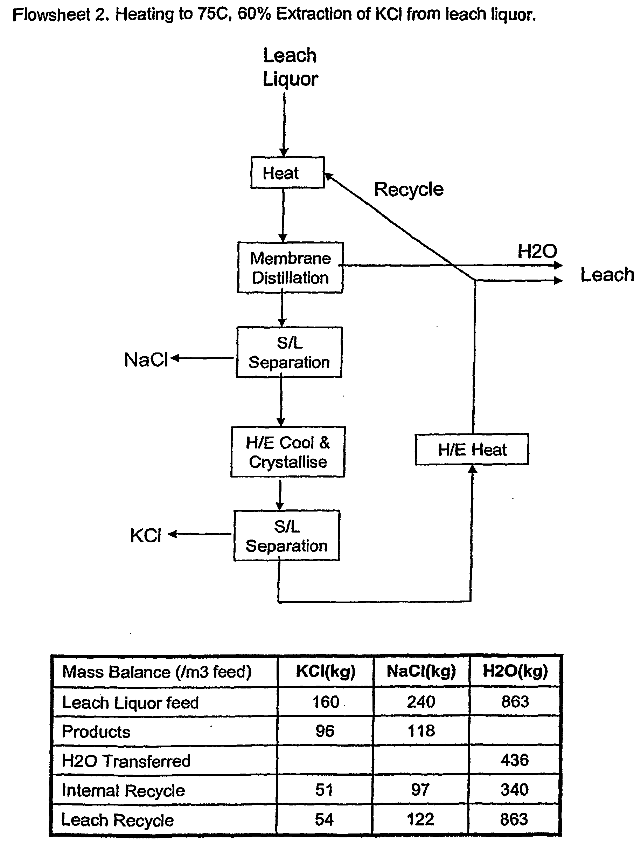

The flowsheet shown in Figure 2 is substantially the same as the Figure 1 flowsheet.

The main differences between the flowsheets are discussed below.
1. The Figure 2 flowsheet operates at a higher temperature of up to 75°C for the feed solution.
2. The higher temperature of the feed solution makes it possible to extract a higher concentration of potassium chloride - cf 60% versus 50%.
3. The higher temperature of the feed solution makes it possible to recycle the solution remaining after the potassium chloride separation step at a higher temperature and makes it possible to use the heat of the solution to contribute to heating the feed solution. This is shown in the Figure 2 flowsheet by the recycle line supplying at least a part of the recycle solution to a heating step upstream of the membrane system.

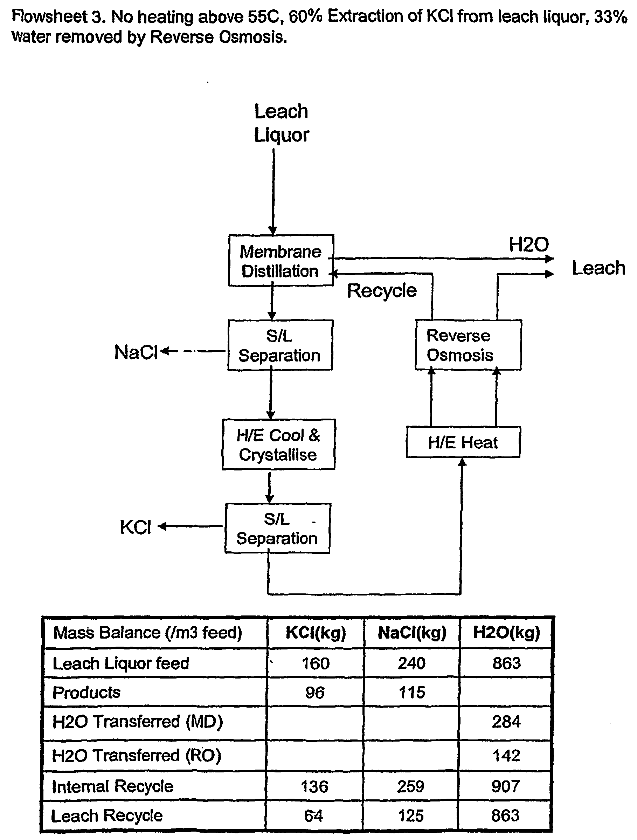

The flowsheet shown in Figure 3 is substantially the same as the Figure 1 flowsheet.

The main difference between the two flowsheets is that in the Figure 3 flowsheet the heated solution remaining after the potassium chloride separation step and the subsequent heat exchange step is supplied to a second membrane system (referred to as "Reverse Osmosis" in the figure) and further water, typically 33%, is removed from the solution in the membrane system.

This reverse osmosis step is possible because both solutions initially have the same salt concentration, and hence osmotic pressure, and although this osmotic pressure is quite high and above that which would allow transfer of the water into a pure water stream such as is done in desalination processes, the pressure required to drive the water from one solution to the other is not excessive when both have significant levels of salt present until a significant portion of the water has been transferred from the solution, as occurs in the first membrane system ("Membrane Distillation" in the figure).

By way of example, whilst the above-described embodiments operate with feed solutions at temperatures of up to 50 and 75°C, the present invention is not so limited and extends to feed solutions at any suitable temperatures.

By way of further example, whilst the above-described embodiments achieve recoveries of 50 and 60% potassium chloride, the present invention is not so limited to these recoveries.

## Claims

1. A method of separating potassium chloride and sodium chloride from a heated solution of these salts includes the steps of sequentially:
(a) forming a heated solution containing potassium chloride and sodium chloride derived from a suitable source;
(b) passing the solution through a distillation membrane system and removing water from the solution and thereby increasing the concentration of sodium chloride in the solution above the solubility of sodium chloride at the temperature of the solution and precipitating sodium chloride from the solution, wherein the distillation membrane system is one of a hydrophobic system or a combination of hydrophilic and hydrophobic systems;
(c) separating the precipitated sodium chloride from the solution;
(d) cooling the solution and thereby decreasing the solubility of potassium chloride below the concentration of potassium chloride in the solution and thereby precipitating potassium chloride from the solution; and
(e) separating potassium chloride from the solution.

2. The method defined in claim 1, wherein step (a) of forming the heated solution containing potassium chloride and sodium chloride includes forming the solution by dissolving mined potash ore above ground or via solution mining involving injecting heated water or a heated solution that is unsaturated with respect to potassium chloride and sodium chloride into a potash ore body and dissolving the ore underground.

3. The method defined in claim 1 or 2, wherein step (a) includes forming the solution at a temperature of at least 50°C.

4. The method defined in claim 3, wherein step (a) includes forming the solution at a temperature of at least 60°C.

5. The method defined in any one of the preceding claims, wherein step (a) includes forming the solution at a temperature of less than 90°C.

6. The method defined in claim 5, wherein step (a) includes forming the solution at a temperature of less than 80°C.

7. The method defined in any one of the preceding claims, wherein step (b) includes controlling water removal from the solution to precipitate sodium chloride crystals of a selected size.

8. The method defined in any one of the preceding claims, which includes recycling the remaining solution after the potassium chloride separation step (e) to step (a) of the method.

9. The method defined in claim 8, which includes heating the remaining solution prior to recycling the solution to step (a) of the method.

10. The method defined in claim 8 or 9, which includes heating the remaining solution prior to recycling the solution to the method by heat exchange with the solution supplied to step (d) and thereby cooling the solution to precipitate potassium chloride.

11. The method defined in any one of the preceding claims, which includes combining (i) the remaining solution after the potassium chloride separation step (e) and (ii) water removed from the solution in step (b), heating the combined solution and using the heated combined solution in step (a) and forming the heated solution containing potassium chloride and sodium chloride.

12. The method defined in any one of the preceding claims, wherein the heated solution of step (a) further contains magnesium chloride, and the method further comprises selectively recovering magnesium chloride from the solution in addition to potassium chloride and sodium chloride.

## Patentansprüche

1. Ein Verfahren zur Trennung von Kaliumchlorid und Natriumchlorid aus einer erhitzten Lösung von diesen Salzen umfassend folgende sequenzielle Schritte:
(a) das Bilden einer erhitzten Lösung enthaltend Kaliumchlorid und Natriumchlorid, die aus einer geeigneten Quelle abgeleitet worden sind;
(b) das Leiten der Lösung durch ein Membrandestillationssystem und das Entfernen von Wasser aus der Lösung und die entsprechende Erhöhung der Konzentration von Natriumchlorid in der Lösung oberhalb der Löslichkeit des Natriumchlorids bei der Lösungstemperatur und die Ausfällung von Natriumchlorid aus der Lösung, wobei das Membrandestillationssystem eines von einem hydrophoben System oder einer Kombination von hydrophilen und hydrophoben Systemen ist;
(c) das Abtrennen des ausgefällten Natriumchlorids aus der Lösung;
(d) das Abkühlen der Lösung und die entsprechende Reduktion der Löslichkeit des Kaliumchlorids unterhalb der Konzentration von Kaliumchlorid in der Lösung und die entsprechende Abfällung von Kaliumchlorid aus der Lösung; und
(e) das Abtrennen von Kaliumchlorid aus der Lösung.

2. Das in Anspruch 1 definierte Verfahren, wobei der Schritt (a) in dem die erhitzte Lösung enthaltend Kaliumchlorid und Natriumchlorid gebildet wird, das Bilden der Lösung umfasst, indem abgebautes Pottaschenerz übertage oder durch untertagelaugung umfassend das Einspritzen von erhitztem Wasser bzw. einer bezüglich des Kaliumchlorids und des Natriumchlorids ungesättigten erhitzten Lösung in einen Pottaschenerzkörper und das untertage Lösen des Erzes gelöst wird.

3. Das in Anspruch 1 oder 2 definierte Verfahren, wobei der Schritt (a) das Bilden der Lösung bei einer Temperatur von mindestens 50 °C umfasst.

4. Das in Anspruch 3 definierte Verfahren, wobei der Schritt (a) das Bilden der Lösung bei einer Temperatur von mindestens 60 °C umfasst.

5. Das in einem der vorhergehenden Ansprüche definierte Verfahren, wobei der Schritt (a) das Bilden der Lösung bei einer Temperatur unter 90°C umfasst.

6. Das in Anspruch 5 definierte Verfahren, wobei der Schritt (a) das Bilden der Lösung bei einer Temperatur unter 80°C umfasst.

7. Das in einem der vorhergehenden Ansprüche definierte Verfahren, wobei der Schritt (b) das Kontrollieren der Wasserentfernung aus der Lösung umfasst, damit Natriumchloridkristallen einer ausgewählten Größe ausfällen.

8. Das in einem der vorhergehenden Ansprüche definierte Verfahren, welches das Rückführen der verbleibenden Lösung nach dem Schritt (e) entsprechend dem Abtrennen von Kaliumchlorid zurück in den Verfahrensschritt (a) umfasst.

9. Das in Anspruch 8 definierte Verfahren, welches das Erhitzen der verbleibenden Lösung vor dem Rückführen der Lösung zurück in den Verfahrensschritt (a) umfasst.

10. Das in Anspruch 8 oder 9 definierte Verfahren, welches das Erhitzen der verbleibenden Lösung vor dem Rückführen der Lösung zurück in das Verfahren durch Wärmeaustausch mit der in den Schritt (d) zugeführten Lösung und das entsprechende Abkühlen der Lösung umfasst, damit Kaliumchlorid ausfällt.

11. Das in einem der vorhergehenden Ansprüche definierte Verfahren, welches das Kombinieren von (i) der verbleibenden Lösung nach dem der Abtrennung des Kaliumchlorids entsprechenden Schritt (e) und (ii) Wasser, das von der Lösung im Schritt (b) entfernt worden ist, das Erhitzen der kombinierten Lösung und das Nutzen der erhitzten kombinierten Lösung in Schritt (a) und das Bilden der erhitzten Lösung enthaltend Kaliumchlorid und Natriumchlorid umfasst.

12. Das in einem der vorhergehenden Ansprüche definierte Verfahren, wobei die erhitzte Lösung des Schritts (a) weiterhin Magnesiumchlorid enthält, und das Verfahren weiterhin das selektive Rückgewinnen von Magnesiumchlorid neben Kalium- und Natriumchlorid aus der Lösung umfasst.

## Revendications

1. Un procédé de séparation de chlorure de potassium et chlorure de sodium d'une solution échauffée de ces sels incluant les étapes séquentielles de :
(a) former une solution échauffée contenant du chlorure de potassium et du chlorure de sodium dérivé d'une source appropriée :
(b) faire passer la solution au travers d'un système de membrane de distillation et enlever de l'eau de la solution et augmenter ainsi la concentration de chlorure de sodium dans la solution au-dessus de la solubilité du chlorure de sodium à la température de la solution et précipiter du chlorure de sodium de la solution, dans lequel le système de membrane de distillation est un parmi un système hydrophobe ou une combinaison de systèmes hydrophiles et hydrophobes ;
(c) séparer le chlorure de sodium précipité de la solution ;
(d) refroidir la solution et diminuer ainsi la solubilité du chlorure de potassium au-dessous de la concentration de chlorure de potassium dans la solution et précipiter ainsi du chlorure de potassium de la solution ; et
(e) séparer du chlorure de potassium de la solution.

2. Le procédé défini dans la revendication 1, dans lequel l'étape (a) de formation de la solution échauffée contenant du chlorure de potassium et du chlorure de sodium inclut former la solution en dissolvant du minerai de potasse extrait au-dessus du sol ou moyennant extraction par dissolution incluant l'injection d'eau échauffée ou d'une solution échauffée qui est insaturée par rapport au chlorure de potassium et au chlorure de sodium dans un corps de minerai de potasse et la dissolution souterraine du minerai.

3. Le procédé défini dans la revendication 1 ou 2, dans lequel l'étape (a) inclut former la solution à une température d'au moins 50 °C.

4. Le procédé défini dans la revendication 3, dans lequel l'étape (a) inclut former la solution à une température d'au moins 60 °C.

5. Le procédé défini dans l'une quelconque des revendications précédentes, dans lequel l'étape (a) inclut former la solution à une température inférieure à 90 °C.

6. Le procédé défini dans la revendication 5, dans lequel l'étape (a) inclut former la solution à une température inférieure à 80 °C.

7. Le procédé défini dans l'une quelconque des revendications précédentes, dans lequel l'étape (b) inclut contrôler l'enlèvement d'eau de la solution afin de précipiter des cristaux de chlorure de sodium d'une taille choisie.

8. Le procédé défini dans l'une quelconque des revendications précédentes, qui inclut refluer la solution restante après l'étape (e) de séparation du chlorure de potassium vers l'étape (a) du procédé.

9. Le procédé défini dans la revendication 8, qui inclut échauffer la solution restante avant de refluer la solution vers l'étape (a) du procédé.

10. Le procédé défini dans la revendication 8 ou 9, qui inclut échauffer la solution restante avant de refluer la solution vers le procédé par échange de chaleur avec la solution fournie dans l'étape (d) et refroidir ainsi la solution afin de précipiter le chlorure de potassium.

11. Le procédé défini dans l'une quelconque des revendications précédentes, qui inclut combiner (i) la solution restante après l'étape (e) de séparation de chlorure de potassium et (ii) de l'eau enlevée de la solution dans l'étape (b), échauffer la solution combinée et utiliser la solution combinée échauffée dans l'étape (a) et former la solution échauffée contenant du chlorure de potassium et du chlorure de sodium.

12. Le procédé défini dans l'une quelconque des revendications précédentes, dans lequel la solution échauffée de l'étape (a) contient en outre du chlorure de magnésium, et le procédé comprend en outre récupérer de façon sélective du chlorure de magnésium de la solution en plus du chlorure de potassium et du chlorure de sodium.
